# EUROPEAN PATENT SPECIFICATION

(11) **EP 0 365 128 B1**
(45) Date of publication and mention of the grant of the patent: **15.12.1999**
(21) Application number: 89308923.5
(22) Date of filing: 04.09.1989
(51) Int. Cl.: G06F 11/00, G06F 1/00, G06F 11/14

(54) **Computer system and method of preserving the state of the system**
Rechnersystem und Verfahren zur Behütung des Systemzustandes
Système à calculateur et méthode de préservation de l'état du système

(30) Priority: 06.09.1988 JP 22274388
(43) Date of publication of application: 25.04.1990
(60) Divisional application: 96103428.7
(73) Proprietor: SEIKO EPSON CORPORATION, Shinjuku-ku Tokyo-to (JP)
(72) Inventor: Hanaoka, Masaaki, Suwa-shi Nagano-ken (JP)
(74) Representative: Sturt, Clifford Mark

(56) References cited:
- EP-A- 0 230 351
- GB-A- 1 545 169
- US-A- 3 801 963
- PATENT ABSTRACTS OF JAPAN, vol. 12, no. 249 (P-730), 14th July 1988; & JP-A-63 039 053 (NEC CORP.) 19-02-1988
- IBM TECHNICAL DISCLOSURE BULLETIN, vol. 9, no. 6, November 1965, pages 731-734, New York, US; D.C. SHATTUCK et al.: "Memory protection system when power failure"

## Description

The present invention relates to a computer system and to a method of operating the system.

Continuity of personal computers is desirable such that when a power supply for the personal computer is turned off and then is subsequently turned on again, the system is restored to the state established immediately before the power supply was previously turned off for permitting processing being executed at the time when the power supply was turned off to continue.

The advent of small sized, battery driven computers has resulted in portable computers which can be used irrespective of place and time, for example, while waiting for trains or aeroplanes, in free time before the start of meetings, etc. However, it is often difficult to complete all the procedures for the required processing in such a limited period of time. On these occasions, such computers would become more convenient to use, if the suspended processing could be continued later in any free moment, even after the power supply had been turned off and then on again.

Meanwhile, if the battery voltage drops too low (LOW BATTERY) during periods of use or because a power switch is inadvertently left on by the user, processing needs to be suspended under such non-chargeable conditions and then resumed later after re-charging. In the worst case, all of the data may be lost in the course of processing due to cut off of the power supply. It is desirable, therefore, for the power supply to be turned off after the current state is saves and for the suspended processing to be continued following clearing of the LOW BATTERY condition.

As will be seen from the above, the continuity of a computer is one of the crucial factors in improving the convenience of portable computers, in particular.

Realisation of continuity absolutely requires the system state at the point when the power supply is turned off to be held. That is, the contents of a main memory, the setting condition of I/O ports, the state of a CPU, etc. must be held. The setting condition (status) of the I/O ports specifies in turn the condition of hardware at the time when the power supply is turned off. The condition of the hardware can be stored as information in the main memory, and so the retention of data in the main memory will be considered herein.

With the conventional continuity techniques, the retention of data in the main memory has basically been realised by back-up of the power supply for the main memory. Specifically, power is supplied continuously to the main memory, comprising an SRAM. even after turn off of the power supply in order to retain the contents of the SRAM. An example of such a conventional continuity technique is shown in European patent publication No. 0230351. Alternatively, if the main memory comprises a DRAM, a periodic refresh is effected even after turn off of the power supply.

However, such continuity techniques give rise to the following problems:-
(1) The system cost is increased as a result of the complexity of the circuit configuration and the specialised design of the devices employed.
(2) Data cannot be preserved in the long term using only battery cells.

Thus, the resulting system is expensive and does not satisfactorily accomplish continuity.

The present invention seeks to solve the problems mentioned above, and to provide a continuity method which is inexpensive and reliable, as well as a more universal continuity system.

According to one aspect of the present invention, there is provided a computer system having means for preserving the state of the system for future processing, the preserving means comprising detecting means for detecting an event indicating a process for saving the system state is to be started, and characterised in that the preserving means further comprise system state saving means responsive to an instruction from the detecting means for generating for supply to an external store a data output representing the contents of a main memory, I/O status and CPU status, the external store having a storage area of predetermined capacity for completely storing the contents of the main memory with said capacity being fixedly maintained separate from the storage capacity for saving programs and data, and system state restoring means operable to read out from the external store data previously stored therein for restoring the contents of the main memory, I/O status and CPU status to a previous condition.

As described in detail below, the system can achieve not only continuity relative to the state established when a power supply was last turned off but also continuity by restoring the system to the state it was in at a yet earlier time.

It is a preferred feature of the present invention that the system can operate in a continuous manner by recording the system state, at the time of turning off the power supply or at a time instructed by the user, into the external store and then restoring the recorded earlier state upon turning on the power supply or upon an instruction from the user.

Thus, the processing occurring immediately before turn off of the power supply may be executed continuously.

According to a second aspect of the present invention there is provided a method of preserving the state of a computer system for subsequent processing including detecting an event indicating a process for saving the state of the computer system is to be started, characterised by generating in response to the detection a data output for supply to an external store, which data output represents the contents of a main memory, I/O status and CPU status, the external store having a storage area of predetermined capacity for completely storing the contents of the main memory with said capacity being fixedly maintained separate from the storage capacity for saving programs and data, and subsequently reading out from the external store data previously stored therein for restoring the contents of the main memory, the I/O status and the CPU status to a previous condition.

The present invention will be described further, by way of example, with reference to the accompanying drawings, in which:-
Figure 1 is a block diagram illustrating the basic structure of a computer according to the present invention;
Figure 2 is a block diagram illustrating a first embodiment of save process start detecting means of the computer;
Figure 3 is a block diagram illustrating a second embodiment of save process start detecting means of the computer;
Figure 4 is a block diagram illustrating a third embodiment of save process start detecting means of the computer;
Figure 5 is a block diagram illustrating a fourth embodiment of save process start detecting means of the computer;
Figure 6 is a diagram for explaining the operation of a save start command detection processing program shown in Figure 5;
Figure 7 is a block diagram illustrating a first embodiment of system state saving means of the computer;
Figure 8 is a block diagram illustrating a second embodiment of system state saving means of the computer;
Figure 9 is a block diagram illustrating a third embodiment of system state saving means of the computer;
Figure 10 is a block diagram illustrating a first embodiment of post save processing means of the computer;
Figure 11 is a block diagram illustrating a second embodiment of post save processing means of the computer;
Figure 12 is a block diagram illustrating a first embodiment of restore process starting means of the computer;
Figure 13 is a block diagram illustrating a second embodiment of restore process starting means of the computer;
Figure 14 is a block diagram illustrating a first embodiment of system state restoring means of the computer;
Figure 15 is a block diagram illustrating a second embodiment of system state restoring means of the computer;
Figure 16 is a block diagram illustrating a third embodiment of system state restoring means of the computer;
Figure 17 is a block diagram illustrating a first embodiment of post restoration processing means of the computer;
Figure 18 is a block diagram illustrating a second embodiment of post restoration processing means of the computer;
Figure 19 is a block diagram illustrating in greater detail one embodiment of computer according to the present invention; and
Figure 20 is a block diagram illustrating in greater detail another embodiment of computer according to the present invention.

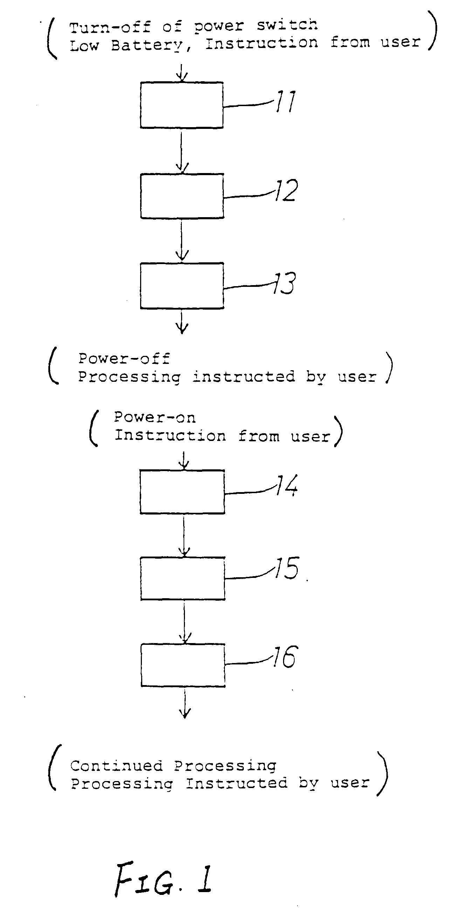

Referring initially to Figure 1, a computer according to the present invention comprises generally save process start detecting means 11, which manage and determine the timing at which the system state is to be saved. The save process is triggered by one of the following: turning off a power switch, the occurrence of a LOW BATTERY condition, or an instruction from the user, etc.

When a decision to save is made by the save process start detecting means 11, system state saving means 12 are arranged to supply data relating to the system state to an external store that will not lose the data even if the system power is cut off.

Post save processing means 13 then perform any processing required after the system state has been saved, for example, turning off the power supply, continued processing, initialisation, etc. Usually, the post save processing means 13 initiate turn off of the power supply.

Subsequently, restore process starting means 14 are activated, after raising the system or upon an instruction from the user, in order to activate system state restoring means 15.

The system state restoring means 15 read out the data relating to the earlier system state stored in the external store and sets such data in the system for restoring the previous state.

Post restoration processing means 16 finally restart the previously interrupted process in the restored system state. As an alternative, however, it is possible for a user to interrupt the process altogether.

Since each of the means employed in the present invention can be implemented in various ways, preferred embodiments of these means will be described first, following which typical configurations for the overall computer will be described by way of example.

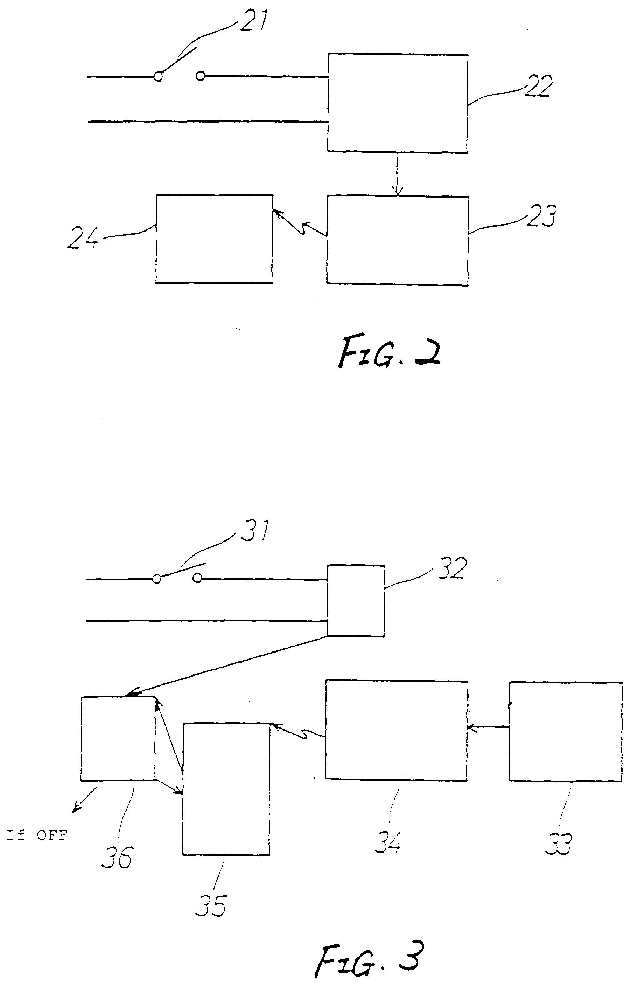

A first embodiment of the save process start detecting means 11 is shown in Figure 2, and comprises a power switch 21, a power switch state detector 22, an interruption controller 23, and a power off detection processing program 24.

When the power switch 21 is turned off by the user, the power switch state detector 22 detects the turn off of the power switch 21 and issues to the interruption controller 23 a signal for requesting an interruption in accordance with the cut off of the power. Upon receiving that signal, the interruption controller 23 causes an interruption indicating cut off of the power. The power off detection processing program 24 is responsive to the interruption to detect turn off of the power switch 21 in software terms and carries out the necessary process steps to activate the system state saving means 12 (described later).

A second embodiment of the save process start detecting means 11 shown in Figure 3 comprises a power switch 31, a switch state port 32, a system timer 33, an interruption controller 34, a timer routine 35, and a power off detection processing program 36.

When the power switch 31 is turned off by the user, the switch state port 32, which is connected to the power switch 31 and which is capable of reading the state of the power switch using a program, indicates turn off of the power switch 31. Further, the system timer 33 sends an interruption request signal to the interruption controller 34 at certain intervals, whereupon the interruption controller 34 causes a timer interruption. In response to the interruption request, the timer routine 35 is activated first to carry out the necessary processing such as up-dating of a counter and then to call the power off detection processing program 36. The power off detection processing program 36 reads the switch state port 32 and activates the system state saving means 12 (described later) if the power switch 31 is turned off, but returns the control back to the timer routine 35 to terminate the timer interruption if the power switch 31 is turned on.

While the first embodiment of the save process start detecting means 11 is activated in response to the interruption caused upon cut off of the power, the second embodiment of the save process start detecting means 11 detects cut off of the power only at certain intervals during the timer interruption.

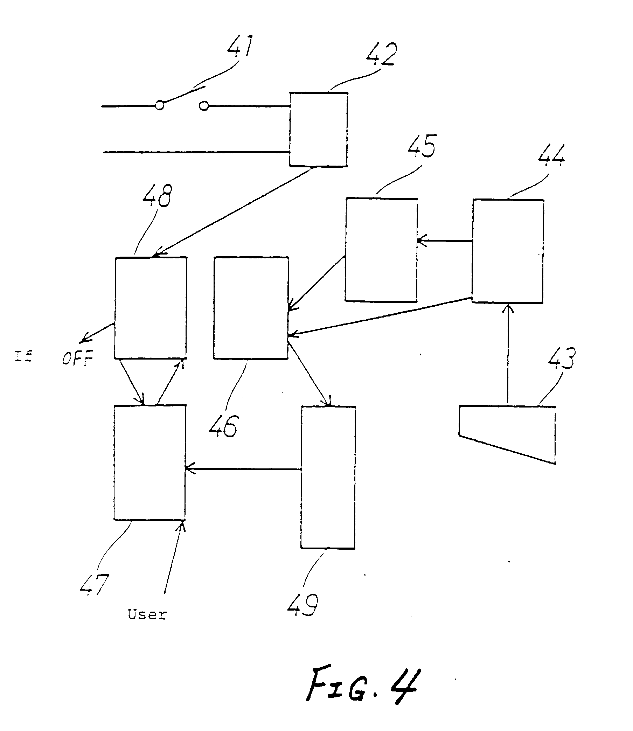

A third embodiment of the save process start detecting means 11 will now be described with reference to Figure 4. This embodiment comprises a power switch 41, a switch state port 42, a keyboard 43, a keyboard data receiving unit 44, an interruption controller 45, a keyboard interruption routine 46, a keyboard data reading routine 47, a power off detection processing program 48, and a keyboard data buffer 49.

In this embodiment, when the power switch 41 is turned off by the user, the switch state port 42, connected to the power switch 41 and capable of reading the on/off state of the power switch using a program, indicates turn off of the power switch 41. Further, when any key on the keyboard 43 is depressed, the keyboard data receiving unit 44 receives data from the keyboard 43 indicating that that key is depressed and sends a keyboard data receiving interruption request signal to the interruption controller 45. The interruption controller 45 causes a keyboard input interruption to activate the keyboard interruption routine 46, so that the keyboard data is read out of the keyboard data receiving unit 44 and loaded into the keyboard data buffer 49. The keyboard data loaded into the keyboard data buffer 49 is read out by the keyboard data reading routine 47 upon a request from a user program. The keyboard data reading routine 47 reads out the keyboard data and supplies it to the user program when keyboard data is present in the keyboard data buffer 49, but informs the user program of the absence of a key input, or waits until there is a key input and the keyboard data is entered into the keyboard data buffer 49, if the keyboard data buffer 49 is vacant. The decision whether to return the null state or wait for entry of the keyboard data is determined by the function of the keyboard data reading routine 47 or by the instruction from the user program. After reading the keyboard data, or immediately before indicating to the user program that the keyboard data buffer 49 is vacant, or during the wait for the next keyboard data to be loaded into the keyboard data buffer 49, the keyboard data reading routine 47 calls the power off detection processing program 48, which reads the power switch state port 42 and which then activates system state saving means 12 (described later) if the power switch 41 is turned off.

While the second embodiment of the save process start detecting means 11 detects cut off of the power in association with the timer interruption, the third embodiment of the save process start detecting means 11 features the detection of cut off of the power in association with the keyboard data reading program called by the user program most frequently.

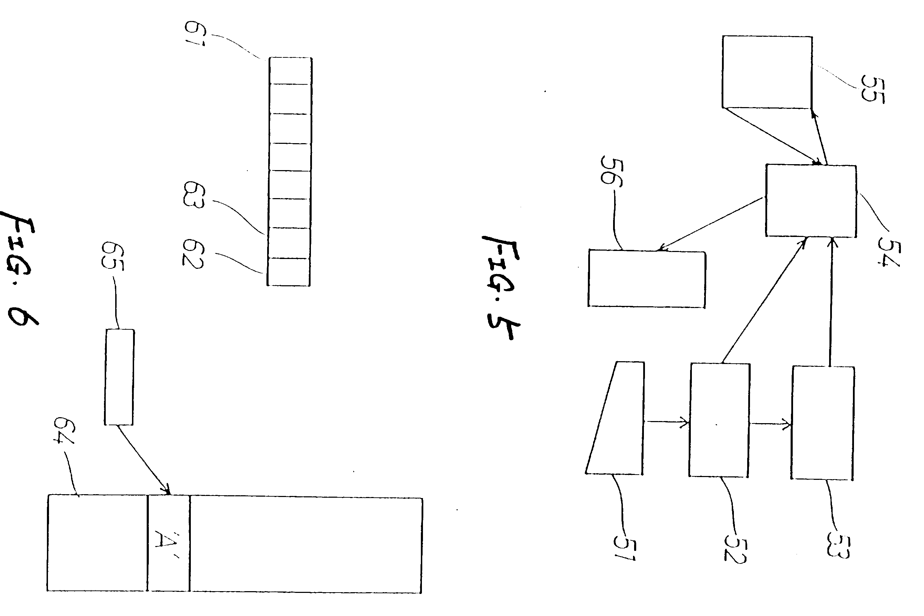

A fourth embodiment of the save process start detecting means 11, which is shown in Figure 5, comprises a keyboard 51, a keyboard data receiving unit 52, an interruption controller 53, a keyboard interruption routine 54, a save start command detection processing program 55, and a keyboard data buffer 56.

In this embodiment, when any key on the keyboard 51 is depressed, the keyboard data indicating that that key is depressed is transmitted by the keyboard 51 to the keyboard data receiving unit 52, which in turn sends a keyboard data receiving interruption request signal to the interruption controller 53. The interruption controller 53 activates the keyboard interruption routine 54, so that the keyboard data is read out of the keyboard data receiving unit 52 and loaded into the keyboard data buffer 56, following which the keyboard interruption routine calls the save start command detection processing program 55. The save start command detection processing program 55 monitors the contents of the keyboard buffer or other data concerning the keyboard, for example concerning keyboard status, and calls the system state saving means 12 (described later) when a specified state arises.

The save start command detection processing program 55 detects the specified state in the following manner: with reference to Figure 6, a keyboard status byte 61 includes a first bit 62 serving as a shift key status bit, and a second bit 63 serving as a control key status bit.

When during the keyboard interruption routine 54, a character such as "A", for example, is depressed on the keyboard and received as input data, the received character data is loaded into a keyboard buffer 64 and, as the final input character, its location within the keyboard buffer 64 is indicated by a buffer top pointer 65. If the next received data indicates a shift key being depressed (turned on), this data is not loaded into the keyboard buffer 64, and the shift key status bit 62 as the first bit of the keyboard status byte 61 is set to 1. Upon receiving the data indicating that the shift key has been released, the shift key status bit 62 is set to 0. Thus, the shift key status bit 62 takes 1 while the shift key is being depressed, but 0 when it is released. Likewise, the state of a control key is indicated by the control key status bit 63. Assuming that the instruction provided from the user to start the save processing is indicated by the fact that "the shift key and the control key are depressed simultaneously and the character "A" is further depressed", the save start command detection processing program 55 checks firstly whether the shift key status bit 62 and the control key status bit 63 are both set to 1 (turned on), and secondly whether the data within the keyboard buffer 64 pointed by the buffer top pointer 65 is "A". If the above three conditions are all satisfied, the system state saving means 12 (described later) is called.

As will be apparent from the above description, while the first to third embodiments of the save process start detecting means 11 detect turn off of the power switch, the fourth embodiment detects an instruction input by the user from the keyboard.

In a case where the first to third embodiments of the save process start detecting means 11 are modified by replacing the power switches 21, 31 and 41 with system voltage detection command switches, which detect electrically a decrease in voltage when the system voltage drops below a certain reference level and which operates similarly to the power switches 21, 31 and 41, the system state saving means 12 (described later) can still be activated in the same manner. The system voltage detection command switches in this instance may have a structure which takes into consideration characteristics of battery cells, the system state, time dependent variations in the decrease of the system voltage and other factors, such switches having the object of detecting a state when the charge capacity in the battery drive system has been lowered, before shut down of the system.

Referring now to the system state saving means 12, information relating to the system state, including the contents of a main memory, I/O status concerning the setting of I/O ports and hence the condition of devices in the system, the CPU state, etc., must be saved. The I/O status in terms of the setting manner and values of the I/O ports, and hence the condition of the devices, must be explicitly stated. In terms of information, however, the I/O status can be handled in a like manner to the information representing the state of the main memory and the CPU. Various means for outputting such information into an external store will now be described.

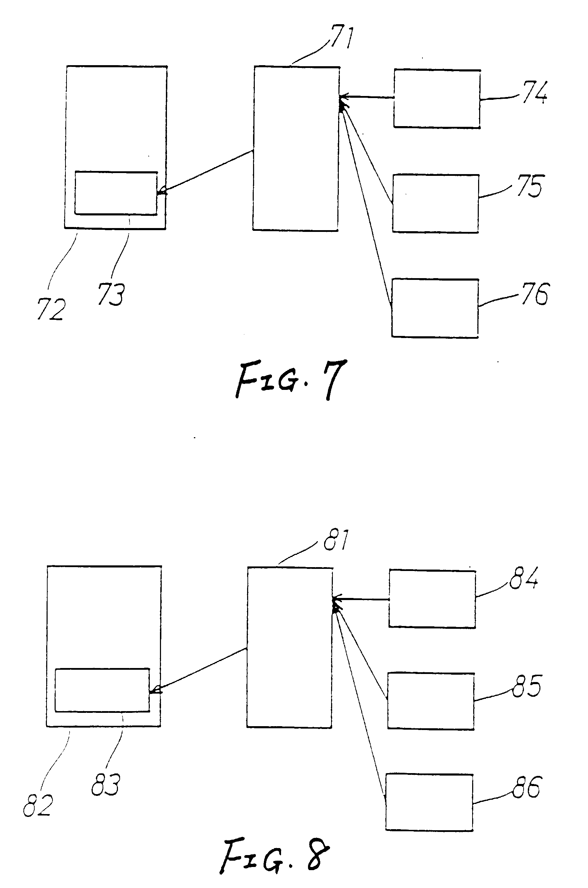

A first embodiment of the system state saving means 12 is shown in Figure 7 and comprises a system saving program 71, a hard disk drive 72 having a system state store region 73, a main memory 74, a CPU status store 75, and an I/O status store 76.

When the system saving program 71 is activated, the contents of the main memory 74, the CPU status store 75 and the I/O status store 76 are transferred into the system state store region 73 within the hard disk drive 72 as an external store. After completion of this outputting task, the control initiative is transferred to post save processing means 13 (described later).

The contents of the main memory 74 are basically only required to give information sufficient for realising system continuity. In general, the memory information that does not concern the continuity process itself needs to be saved in the state established prior to activation of the save process start detecting means 11.

The CPU status store 75 gives information with which the system state restoring means 15 (described later) can restore the CPU state, existing at the time of the last or yet earlier turn off of the power switch or at the time instructed by the user, when the power switch is next turned on or when the user next provides an instruction. Generally, the CPU status is stored in a stack of the main memory 74, and hence is saved at the same time as the contents of the main memory 74. The information in a special register etc. within the CPU is saved separately.

The I/O status store 76 gives information about I/O ports and the devices in the computer, which information is capable of setting the I/O ports and the devices and then restoring the I/O ports and the devices, to their state at the point immediately before activation of the aforesaid save process start detecting means 11, when the power switch is next turned on or when the system state is restored upon an instruction from the user. Those parts among the I/O information which remain unchanged irrespective of turn on/off of the power switch are not required to be saved.

The system state store region 73 within the hard disk drive 72 has capacity reserved at the time of logical formatting, which is sufficient only to store the additional information necessary for completely saving the contents of the main memory 74, the CPU status store 75 and the I/O status store 76 under control. Hence, the region 73 is separate from the region for storing DOS as well as the programs and data utilised under DOS. Thus, the system state store region 73 is fixedly maintaining within the hard disk drive 72 for being read by system state restoring means 15 (described later) for restoring the system state.

A second embodiment of the system state saving means 12 shown in Figure 8 comprises a system saving program 81, a hard disk drive 82, a system state store file 83 residing in the hard disk drive 82, a main memory 84, a CPU status store 85, and an I/O status store 86.

In the embodiment shown in Figure 8, when the system saving program 81 is activated, the contents of the main memory 84, the CPU status store 85 and the I/O status store 86 are transferred, in the form of one file, to the hard disk drive 82 as an external store. This file is the system state store file 83. While the main memory 84, the CPU status store 85 and the I/O status store 86 are the same as those described in connection with the first embodiment of the system state saving means 12, the present embodiment of the system state saving means features the system state store file 83 instead of the aforesaid system state store region 73 to store the relevant information.

Storing the system state in the form of a file can increase the number of states logically stored. This makes it possible to restore the system not only to the state existing at the time when the power switch was last turned off or at the time instructed by the user, but also to a state existing at the time of a yet earlier turn off of the power switch or at any time instructed by the user. Handling in the form of a file also readily permits the deletion or correction of the information stored. In the case of restoring the system to the state existing at a point earlier than the last turn off of the power switch, however, it is required for the system state restoring means 15 (described later) to execute the processing without leaving any contradictions, because of the probability of changes in the contents of the external store.

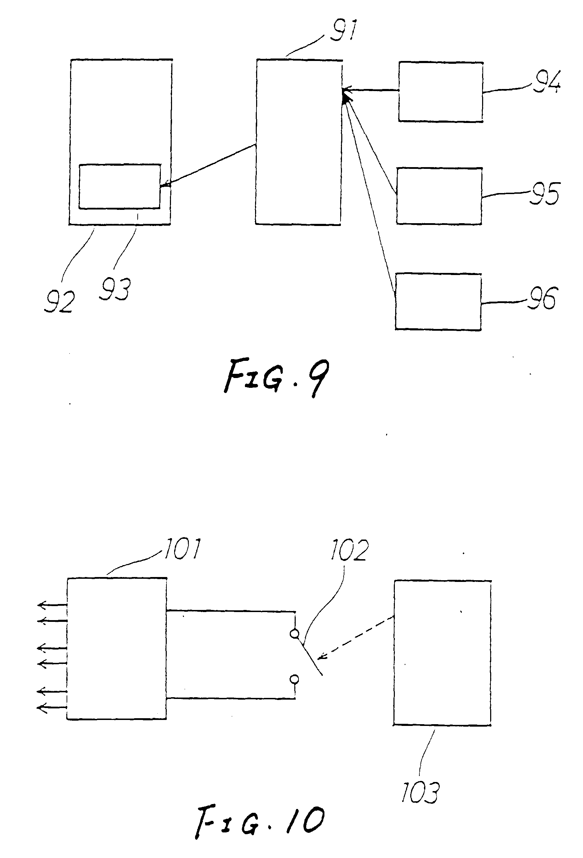

A third embodiment of the system state saving means 12 will now be described with reference to Figure 9. This embodiment comprises a system saving program 91, a floppy diskette 92, a system state store region 93 as a specific area in the floppy diskette 92, a main memory 94, a CPU status store 95, and an I/O status store 96.

In this embodiment, the hard disk drive 72 in the first embodiment of the system state saving means 12 is replaced by the floppy diskette 92. Information such as the contents of the main memory 94, the CPU status store 95 and the I/O status store 96 is saved in a like manner as in the aforesaid first embodiment.

While the hard disk drive 72 is fixed to the computer body, the floppy diskette 92 is not fixed to the computer body and can be replaced as a recording medium. According to this embodiment, although the system state store region 93 is fixed in one floppy diskette, multiple system states can be recorded and retained using a plurality of floppy diskettes. In this respect, similar considerations as in the second embodiment of the system state saving means apply.

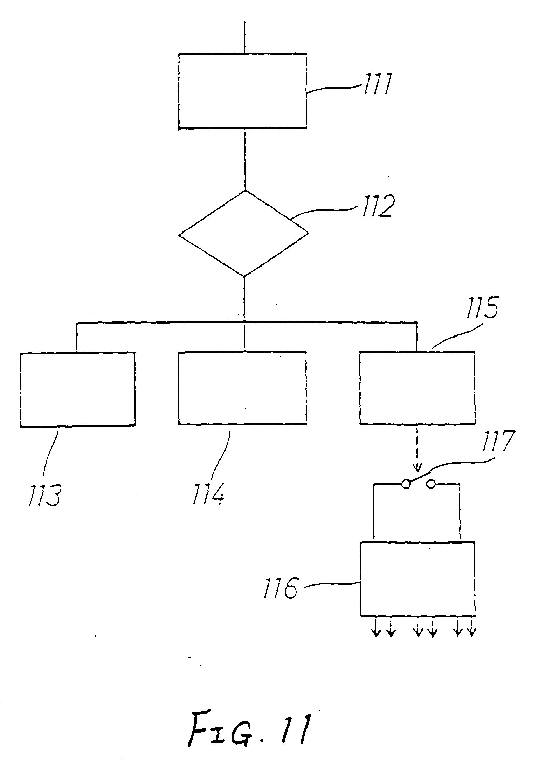

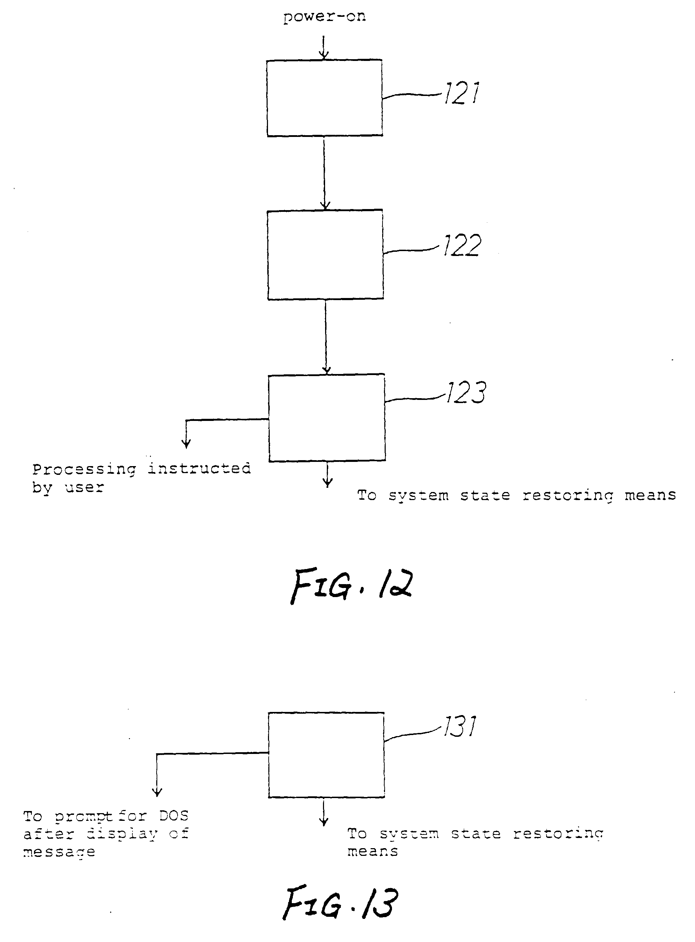

Respective embodiments of the post save processing means 13 will now be described with reference to Figures 10 and 11.

The embodiment shown in Figure 10 comprises a power supply unit 101, an electric power switch 102 and an a power off program 103. The power supply unit 101 supplies power to the system. The electrical power switch 102 is connected to the power supply unit 101 and is capable of disconnecting the power supply unit 101 using software. When the power off program 103 initiates turning off of the electric power switch 102, the power supply unit 101 is disconnected and the supply of power to the system is cut off. Thus, this embodiment of the means 13 permits the power supplied to the system to be cut off by means of software.

The embodiment of the post save processing means 13 shown in Figure 11 comprises a processing select program 111, a processing determination program 112, a continuation program 113, a system initialisation program 114, a power off program 115, a power supply unit 116, and an electric power switch 117.

This embodiment represents post save processing means which enable the type of processing to be selected upon an instruction from the user after saving the system state into the external store. In this embodiment, three choices as to the type of processing to be selected are provided. The processing select program 111 gives the user a display of the types of processing, which may be executed after saving of the system state, and prompts the user to select any one of the choices for instructing which type of processing is to be executed. If the instruction from the user is appropriate, the processing determination program 112 executes the processing program selected. In this embodiment, the following three choices of types of processing are offered:
(1) continue the same processing after saving;
(2) initialise the system and raise it from the beginning; and
(3) cut off the power.

Depending on which of the three choices is selected, the continuation program 113, the system initialisation program 114 and the power off program 115 are executed, respectively.

The continuation program 113 allows the same processing as was being executed before activation of the save process start detecting means 11 to be continued. In this case, it is necessary to eliminate the event which caused the save process start detecting means 11 to be activated, or to prevent the save process start detecting means 11 from being operated again immediately.

The system initialisation program 114 initialises the system. In practice, the control initiative is advanced to an initialisation routine prepared beforehand.

The power off program 115 cuts off the power for the system in a like manner to the aforesaid post save processing means 13.

The restore process starting means 14 serves to activate the system state restoring means 15 (described later) upon turning on the power for the system or upon an instruction from the user.

A first embodiment of the restore process starting means 14 shown in Figure 12 comprises a power on processing program 121, a boot strap loader 122, and a process start determination program 123.

When the system power is turned on, the power on processing program 121 starts operating to perform a basic check of the system, confirm and fixedly define the configuration, as well as initialise the I/O ports and the devices, such as RAMS, making up the system. Messages or the like are delivered, as required, to report the system state. The boot strap loader 122 is activated to load an operating system. After loading, the control initiative is usually transferred to the loaded operating system or to the loader contained therein for raising the operating system. In the present instance, however, the control initiative is advanced to the process start determination program 123 to confirm whether the processing can be continued, the process start determination program 123 checking whether the system state has been saved by the system state saving means 12. If so, the system state restoring means 15 (described later) are activated after receiving an instruction from the user for confirmation, or directly. The system state restoring means 15 (described later) can be activated either after waiting for confirmation by the user or without conditions. In the former case, the user determines whether to execute the processing continuously, whereas in the latter case the processing is continuous at all times.

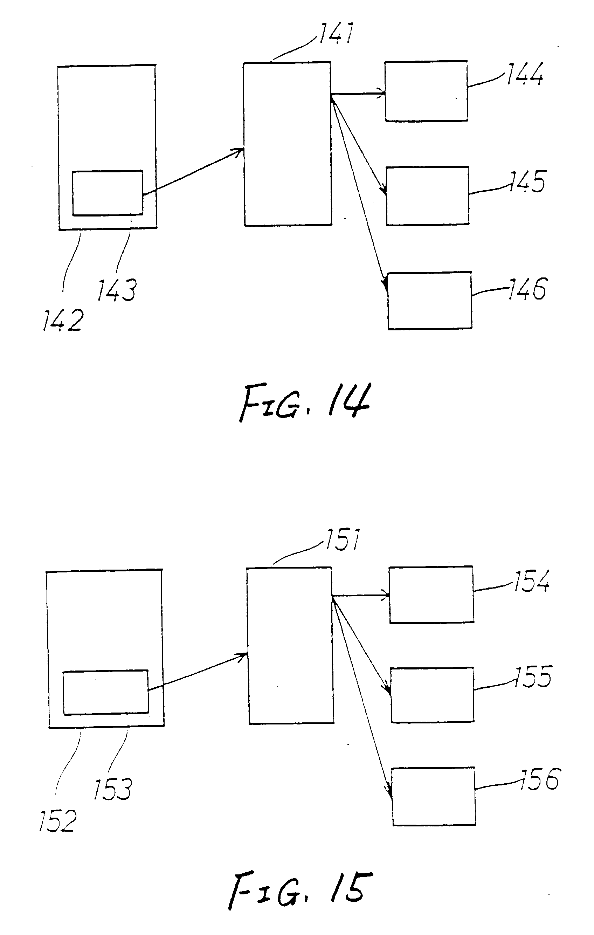

Figure 13 shows a second embodiment of the restore process starting means 14. The second embodiment comprises a processing start program 131 which is provided as one of the commands for DOS and which runs the system state restoring means 15 (described later) if the system state has been saved by the system state saving means 12. If the system state has not been saved, the processing start program 131 issues a message or the like to inform the user that the system state cannot be restored.

The system state restoring means 15 will now be described, a first embodiment of these means being shown in Figure 14. The first embodiment of the system state restoring means comprises a system restoring program 141, a hard disk drive 142 having a system state store region 143 as a specific area therein, a main memory 144, a CPU status store 145, and an I/O status store 146.

This embodiment of the system state restoring means 15 co-operates with the first embodiment of the system state saving means 12 in tandem. When the system restoring program 141 is activated, the system restoring program reads the system state, which has been saved by the system state saving means 12, out of the system state store region 143 within the hard disk drive 142, thereby restoring the system state including the contents of the main memory 144, the CPU status store 145 and the I/O status store 146 to the preceding condition. The CPU status is completely restored to the original state in the final step of the post restoration processing means 16 (described later). Also, the I/O status is mostly restored by the means 15, but may be changed until the final step of the post restoration processing means 16 (described later), such changes being co-ordinated by the post restoration processing means 16 to restore the I/O status completely to the previous condition.

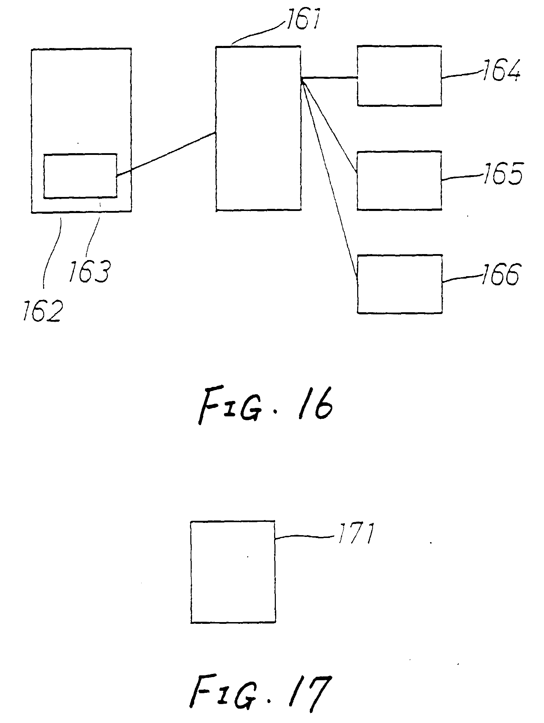

A second embodiment of the system state restoring means 15 shown in Figure 15 comprises a system restoring program 151, a hard disk drive 152, a system state store file 153 constituting a file in the hard disk drive 152, a main memory 154, a CPU status store 155, and an I/O status store 156.

This embodiment of the system state restoring means co-operates with the second embodiment of the system state saving means 12 in tandem. When the system restoring program 151 is activated, the system restoring program 151 reads the system state, which has been saved by the system state saving means 12, out of the system state store file 153 within the hard disk drive 152, thereby restoring the system state including the contents of the main memory 154, the CPU status store 155 and the I/O status store 156 to the previous condition. The restoring method is the same as that which takes place in the aforesaid first embodiment of the system state restoring means. As stated in connection with the second embodiment of the system state saving means 12, there are a plurality of system state store files in some cases. In such cases, it is necessary to adapt the system restoring program 151 either for restoring the system state that was saved the last time, or for displaying the list of files to the user to prompt selection of any one list.

A third embodiment of the system state restoring means 15 is shown in Figure 16 and comprises a system restoring program 161, a floppy diskette 162, a system state store region 163 constituting a specific area in the floppy diskette 162, a main memory 164, a CPU status store 165 and an I/O status store 166.

This embodiment of the system state restoring means co-operates with the third embodiment of the system state saving means 12 in tandem. When the system restoring program 161 is activated, the system restoring program 161 reads the system state, which has been saved by the system state saving means 12, out of the system state store region 163 within the floppy diskette 162, thereby restoring the system state including the contents of the main memory 164, the CPU status store 165 and the I/O status store 166 to the previous condition. The restoring method is the same as that which takes place in the first embodiment of the system state restoring means 15.

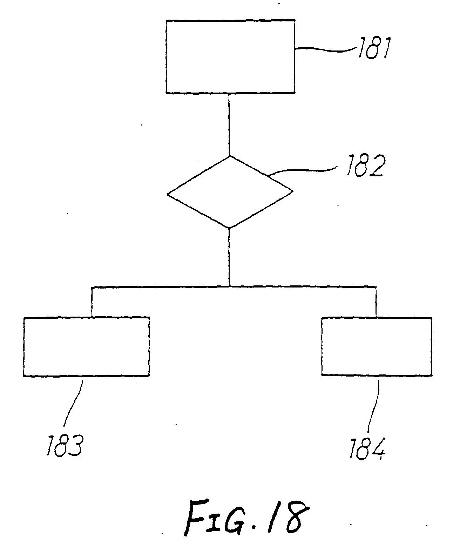

Two embodiments of the post restoration processing means 16 will now be described with reference to Figures 17 and 18.

The first embodiment shown in Figure 17 comprises a continuation processing program 171. After the system state has been restored to the previous condition by the system state restoring means 15, the system control is advanced to the continuation processing program 171. The continuation processing program 171 co-ordinates any changes in the system state restored by the aforesaid system state restoring means required to bring it into the final state allowing continuation processing, and then advances the system control to the point immediately following that at which the save process start detecting means 11 was operated. At this time, the system is already restored to the previous state, so the program which was previously being run is now finally run in a continued manner.

The second embodiment of the post restoration processing means shown in Figure 18 comprises a processing select program 181, a processing determination program 182, a continuation processing program 183, and a continuation break program 184.

This embodiment allows the user to instruct which type of processing is to be executed, after the restoration of the system state by the aforesaid system state restoring means 15. In this embodiment, there are provided two choices as to the type of processing to be selected. The processing select program 181 gives the user a display of the types of processing executable after restoration of the system state, and prompts the user to select one of the choices for instructing which type of processing is to be executed. If the instruction is appropriate, the processing determination program 182 executes the processing program selected. In this embodiment, the following types of processing are offered:
(1) restore the system to the previous state for realising continuation of the processing; and
(2) break continuation of the processing and then return to the command mode of DOS.

Depending on which of these two choices is selected, the continuation processing program 183 and the continuation break program 184 are executed, respectively.

The continuation processing program 183 is the same as the aforesaid continuation processing program 171 in the manner in which the continuation of the processing is realised. The continuation break program 184 returns the processing to the usual command mode of DOS. Accordingly, continuation of the processing is suspended.

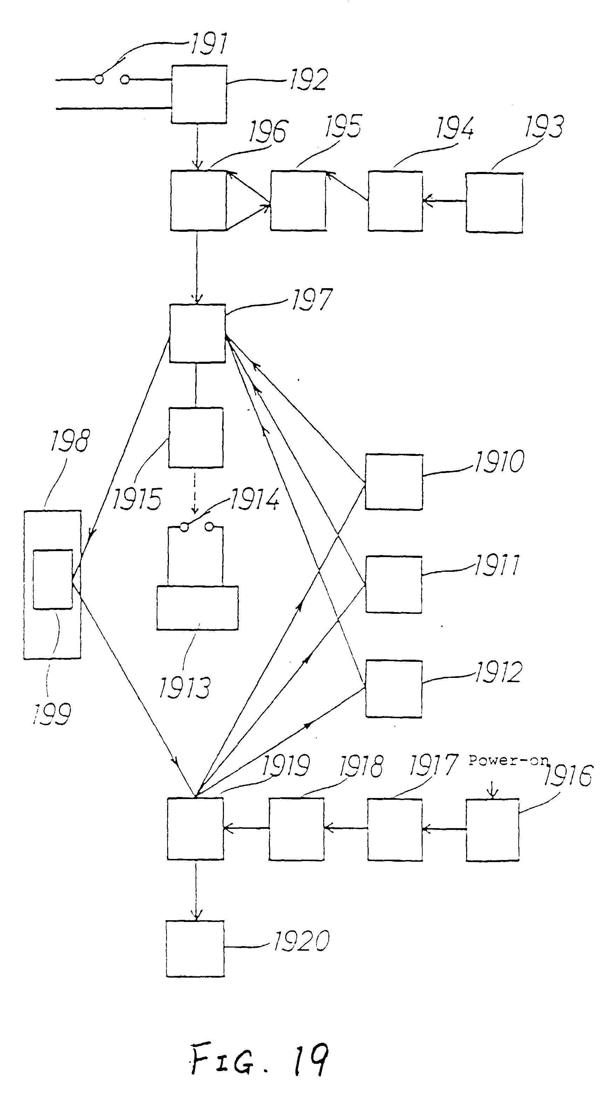

A typical computer incorporating the above individual means together will be explained below with reference to Figure 19.

The computer comprises a power switch 191, a switch state port 192, a system timer 193, an interruption controller 194, a timer routine 195, and a power off detection processing program 196. The computer further comprises a system saving program 197, a hard disk drive 198, having therein a system state store region 199, a main memory 1910, a CPU status store 1911, an I/O status store 1912, and power supply unit 1913 having an electric power switch 1914 capable of turning off the power supply unit 1913 by means of software. A power off program 1915 controls the switch 1914. A power on processing program 1916, a boot strap loader 1917, a processing start program 1918, a system restoring program 1919 and a continuation processing program 1920 are also provided.

The above configuration combines the following embodiments of each of the basic means:
(1) The save process start detecting means 11 shown in Figure 3;
(2) The system state saving means 12 shown in Figure 7;
(3) The post save processing means 13 shown in Figure 10;
(4) The restore process starting means 14 shown in Figure 12;
(5) The system state restoring means 15 shown in Figure 14; and
(6) The post restoration processing means 16 shown in Figure 17.

Operation of this embodiment of the computer will now be described.

When the power switch 191 is turned off by the user, the switch state port 192, connected to the power switch 191 and capable of reading the state of the power switch using a program, indicates the turn off of the power switch 191. Further, the system timer 193 sends an interruption request signal to the interruption controller 194 at certain intervals, so that the interruption controller 194 causes a timer interruption. In response to the interruption request, the timer routine 195 is activated to carry out the necessary processing such as up-dating of a counter and then to call the power off detection processing program 196. The power off detection processing program 196 reads the switch state port 192, when it is allowed to detect the state of the power switch and continue the processing, and activates the system saving program 197 if the power switch 191 is turned off, returning the control back to the timer routine 195 to terminate the timer interruption processing if the power switch 191 is turned on.

The system saving program 197 supplies the contents of the main memory 1910, the CPU status store 1911 and the I/O status store 1912 into the system state store region 199 within the hard disk drive 198 as an external store. After completion of that task, the power off program 1915 is activated. The main memory 1910, the CPU status store 1911, the I/O status store 1912 etc. are as explained above in relation to the first embodiment of the system state saving means 12.

The power supply unit 1913 supplies power to the system. The electrical power switch 1914 is connected to the power supply unit 1913 and is capable of disconnecting the power supply unit 1913 by means of software. When the power off program 1915 turns off the electric power switch 1914, the power supply unit 1913 is disconnected and the supply of power to the system is cut off.

Next, when the system power is turned on, the power on processing program 1916 starts operating to perform a basic check of the system, confirm and fixedly define the configuration, as well as initialise the I/O ports and the devices, such as RAMs, making up the system. The boot strap loader 1917 is then activated to load an operating system (DOS). Subsequently, the process start determination program 1918 is activated to check whether the processing can be continued. If so, the control is advanced to the system restoring program 1919.

The system restoring program 1919 reads the system state, which has been saved by the system saving program 197, out of the system state store region 199 within the hard disk drive 198, thereby restoring the system including the contents of the main memory 1910, the CPU status store 1911, the I/O status store 1912, etc. to the state at the point when the power switch was last turned off. The various considerations in restoring the contents of the main memory 1910, the CPU status store 1911, the I/O status store 1912, etc. are as set forth in connection with the system state restoring means 15.

In order for the system restoring program 1919 to restore the system state completely by returning the control to the point under the command executed when the power was last cut off, i.e. immediately after interruption of the timer routine 195, without any contradications, the final state is co-ordinated by the continuation processing program 1920.

In this way, continuation of the processing with continuous execution can be achieved whereas otherwise the processing would be suspended mid-way by the cut off of the power.

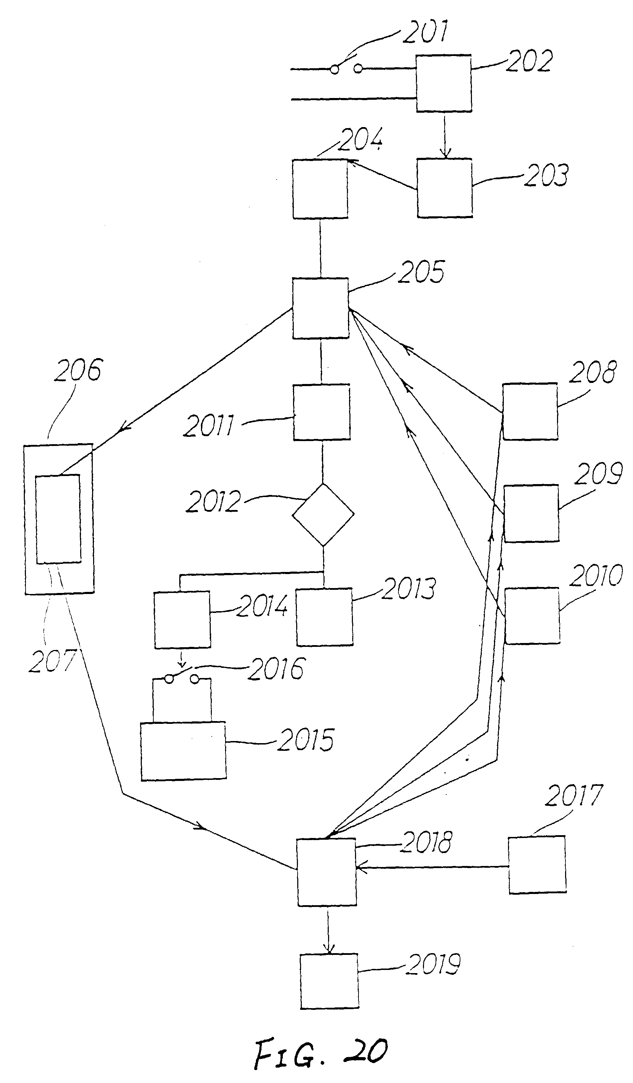

Another embodiment of computer according to the present invention will be described with reference to Figure 20.

This embodiment includes a power switch 201, a power switch state detector 202, an interruption controller 203, and a power off detection program 204. The present embodiment further includes a system state saving program 205, a hard disk drive 206 having a system state store file 207 as a specific area therein, a main memory 208, a CPU status store 209, an I/O status store 2010, a processing select program 2011, a processing determination program 2012, a system initialisation program 2013, a power off program 2014, a power supply unit 2015, and an electric power switch 2016 capable of turning off the power supply unit using software. A processing start program 2017, a system restoring program 2018, and a continuation processing program 2019 are also included.

The above configuration combines the following embodiments of each of the basic means:-
(1) The save process start detecting means 11 shown in Figure 2;
(2) The save start saving means 12 shown in Figure 8;
(3) The post save processing means 13 shown in Figure 11;
(4) The restore process starting means 14 shown in Figure 13;
(5) The system state restoring means 15 shown in Figure 15; and
(6) The post restoration processing means 16 shown in Figure 17.

Operation of this embodiment will now be described.

When the power switch 201 is turned off, the power switch state detector 202 detects this and issues to the interruption controller 203 a signal for requesting an interruption in accordance with the cut off of the power. Upon receiving that signal, the interruption controller 203 causes an interruption indicating cut off of the power under. In response to the interruption, the power off detection program 204 and then the system saving program 205 are activated.

The system saving program 205 supplies the contents of the main memory 208, the CPU status store 209 and the I/O status store 2010, in the form of one file, to the hard disk drive 206 as an external store. This file is the system state store file 207. After completion of that task, the processing select program 2011 is activated. The main memory 208, the CPU status store 209 and the I/O status store 2010 are as explained in relation to the system state saving means 12. Also, the considerations in handling the file are as discussed with reference to the second embodiment of the system state saving means 12.

The processing select program 2011 gives the user a display of the choices in the type of processing which can be executed after saving of the system state, and then waits for an instruction from the user. In this embodiment, the following two choices of types of processing are provided:
(1) initialise the system and raise it from the beginning; and
(2) cut off the power.

Depending on which of the two choices is selected, the processing determination program 2012 activates the system initialisation program 2013 or the power off program 2014. The system initialisation program 2013 initialises the system. In practice, the control is advanced to the initialisation routine prepared beforehand. The power off program 2014 operates the electric power switch 2016 to disconnect the power supply unit 2015, so that the supply of power to the system is cut off, as with the foregoing embodiment.

Subsequently, when the system power is turned on to raise the system, the processing start program 2017 is activated with a command from the operating system, which in turn activates the system restoring program 2018.

The system restoring program 2018 reads the system state, which has been saved by the system saving program 205, out of the system state store file 207 within the hard disk drive 206, thereby restoring the system state including the contents of the main memory 208, the CPU status store 209, the I/O status store 2010 etc. to its condition at the point where the power switch was last turned off. The considerations in restoring the contents of the main memory 208, the CPU status store 209, the I/O status store 2010 etc. are as set forth in connection with the second embodiment of the system state restoring means 15. Also, the considerations in the case when a plurality of system state store files are included are as explained in relation to the second embodiment of the system state restoring means 15.

In order for the system restoring program 2018 to restore the system state completely by returning the control to the point following the command executed immediately before the power was last cut off, i.e. immediately after interruption of the power off detection program 204, without any contradictions, the final state is co-ordinated by the continuation processing program 2019.

While various embodiments of the present invention have been described above, it will be understood taking into account the practical implementation of the respective means and combinations thereof that many other embodiments are possible in addition to the illustrated ones. For example, the external store is not limited to hard disk drives and floppy disk drives, and may include IC cards, compact disk drives, tapes, etc. The system state to be saved can be determined in dependence on the need for reducing the information stored.

In any event, however, the present invention can provide an inexpensive and reliable means of realising continuity for a computer, so that it is possible to fully take advantage of the portable nature of small sized, battery driven computers which are likely to become more commonly used in the future. The invention makes it possible to improve the performance and convenience of such computers.

## Claims

1. A computer system having means for preserving the state of the system for future processing, the preserving means comprising detecting means (11) for detecting an event indicating a process for saving the system state is to be started, and characterised in that the preserving means further comprise system state saving means (12) responsive to an instruction from the detecting means for generating for supply to an external store a data output representing the contents of a main memory, I/O status and CPU status, the external store having a storage area of predetermined capacity for completely storing the contents of the main memory with said capacity being fixedly maintained separate from the storage capacity for saving programs and data, and system state restoring means (14, 15) operable to read out from the external store data previously stored therein for restoring the contents of the main memory, I/O status and CPU status to a previous condition.

2. A system according to claim 1 further characterised in that the event indicating a saving process is to be started comprises one of a demand for turn off of a power supply and an instruction from a user.

3. A system according to claim 1 or claim 2 further characterised in that the system state restoring means are operable in response to one of turning on of a power supply and an instruction from a user.

4. A system according to claim 1, 2 or 3 further characterised in that the system state restoring means are operable to select among data representing successive earlier conditions for the contents of the main memory, the I/O status and the CPU status to a selected earlier condition,

5. A system according to any of claims 1 to 4 further characterised by means for controlling processing after the previous condition is restored to provide continuity with processing leading to the previous condition.

6. A method of preserving the state of a computer system for subsequent processing including detecting an event indicating a process for saving the state of the computer system is to be started, characterised by generating in response to the detection a data output for supply to an external store, which data output represents the contents of a main memory, I/O status and CPU status, the external store having a storage area of predetermined capacity for completely storing the contents of the main memory with said capacity being fixedly maintained separate from the storage capacity for saving programs and data, and subsequently reading out from the external store data previously stored therein for restoring the contents of the main memory, the I/O status and the CPU status to a previous condition.

## Patentansprüche

1. Computersystem mit Mitteln zum Bewahren des Zustands des Systems für eine zukünftige Verarbeitung, wobei die Bewahrungsmittel Erfassungsmittel (11) zum Erfassen eines Ereignisses umfassen, das anzeigt, daß ein Prozeß zum Sichern des Systemzustands zu starten ist, und dadurch gekennzeichnet, daß die Bewahrungsmittel ferner umfassen: Systemzustandssicherungsmittel (12), die auf einen Befehl von den Erfassungsmitteln reagieren, um eine Lieferung einer Datenausgabe zu einem externen Speicher hervorzurufen, welche die Inhalte eines Hauptspeichers, einen I/O-Status und einen CPU-Status repräsentiert, wobei der externe Speicher einen Speicherbereich von vorbestimmter Kapazität für ein vollständiges Speichern der Inhalte des Hauptspeichers aufweist, wobei die Kapazität fest aufrechterhalten ist separat von der Speicherkapazität zum Sichern von Programmen und Daten, sowie Systemzustands-Wiederherstellungsmittel (14, 15), die betrieben werden können, um aus dem externen Speicher zuvor darin gespeicherte Daten auszulesen, um die Inhalte des Hauptspeichers, den I/O-Status sowie den CPU-Status zu einem früheren Zustand wiederherzustellen.

2. System nach Anspruch 1, ferner dadurch gekennzeichnet, daß das Ereignis, welches anzeigt, daß ein Sicherungsprozeß zu starten ist, eine Anforderung für ein Ausschalten einer Stromversorgung oder eine Instruktion von einem Benutzer umfaßt.

3. System nach Anspruch 1 oder 2, ferner dadurch gekennzeichnet, daß die Systemzustands-Wiederherstellungsmittel in Reaktion auf ein Einschalten einer Stromversorgung oder einer Instruktion von einem Benutzer betreibbar sind.

4. System nach Anspruch 1, 2 oder 3, ferner dadurch gekennzeichnet, daß die Systemzustands-Wiederherstellungsmittel betrieben werden können, um unter Daten zu wählen, die aufeinanderfolgend frühere Zustände für die Inhalte des Hauptspeichers, den I/O-Status und den CPU-Status zu einem gewählten früheren Zustand repräsentieren.

5. System nach einem der Ansprüche 1 bis 4, ferner gekennzeichnet durch Mittel zum Steuern einer Verarbeitung, nachdem der frühere Zustand wiederhergestellt ist, um eine Kontinuität bei der Verarbeitung vorzusehen, was zu dem früheren Zustand führt.

6. Verfahren zum Bewahren des Zustands eines Computersystems für eine nachfolgende Verarbeitung, umfassend ein Erfassen eines Ereignisses, welches anzeigt, daß ein Prozeß zum Sichern des Zustands des Computersystems zu starten ist, gekennzeichnet durch: Erzeugen einer Datenausgabe zur Lieferung zu einem externen Speicher in Reaktion auf die Erfassung, wobei die Datenausgabe die Inhalte eines Hauptspeichers, einen I/O-Status sowie einen CPU-Status repräsentiert, wobei der externe Speicher einen Speicherbereich von vorbestimmter Kapazität für ein vollständiges Speichern der Inhalte des Hauptspeichers aufweist, wobei die Kapazität fest aufrechterhalten wird separat von der Speicherkapazität für ein Sichern von Programmen und Daten, sowie ein nachfolgendes Auslesen von Daten aus dem externen Speicher, die zuvor darin gespeichert wurden, um die Inhalte des Hauptspeichers, den I/O-Status sowie den CPU-Status zu einem früheren Zustand wiederherzustellen.

## Revendications

1. Système à calculateur ayant des moyens destinés à préserver l'état du système pour traitement futur, les moyens de préservation comportant des moyens de détection (11) pour détecter un événement indiquant qu'un processus de sauvegarde de l'état du système doit commencer, caractérisé en ce que les moyens de préservation comportent, en outre, des moyens de sauvegarde de l'état du système (12) réagissant à une instruction provenant des moyens de détection afin de générer, pour qu'elles soient délivrées à une mémoire externe, une sortie de données représentant le contenu d'une mémoire principale, la situation d'E/S et la situation d'UC, la mémoire externe ayant une région de stockage d'une capacité prédéterminée pour mémoriser complètement le contenu de la mémoire principale, ladite capacité étant maintenue fixe séparément de la capacité de stockage pour mémoriser les programmes et les données, et des moyens de restauration de l'état du système (14, 15) pouvant fonctionner pour lire, à partir de la mémoire externe, des données stockées auparavant dans celle-ci afin de restaurer le contenu de la mémoire principale, de la situation d'E/S et de la situation d'UC à un état antérieur.

2. Système selon la revendication 1, en outre caractérisé en ce que l'événement indiquant qu'un processus de sauvegarde doit commencer peut être, soit une demande de mise hors service de l'alimentation électrique, soit une instruction provenant de l'utilisateur.

3. Système selon la revendication 1 ou la revendication 2, en outre caractérisé en ce que les moyens de restauration de l'état du système peuvent fonctionner en réponse, soit à la mise hors service de l'alimentation électrique, soit à une instruction provenant de l'utilisateur.

4. Système selon la revendication 1, 2 ou 3, en outre caractérisé en ce que les moyens de restauration de l'état du système peuvent fonctionner afin de sélectionner, parmi les données représentant des états antérieurs successifs, pour (restaurer) le contenu de la mémoire principale, de la situation d'E/S et de la situation d'UC à un état antérieur sélectionné.

5. Système selon une quelconque des revendications 1 à 4, en outre caractérisé en ce qu'il comporte des moyens de commande de traitement pour assurer, après que l'état antérieur ait été restauré, une continuité du traitement menant à l'état antérieur.

6. Méthode de préservation de l'état d'un système à calculateur pour traitement ultérieur, incluant la détection d'un événement indiquant qu'un processus de sauvegarde de l'état du système à calculateur doit commencer, caractérisé en ce qu'elle comporte l'étape consistant à générer, en réponse à la détection, une sortie de données destinées à être délivrées à une mémoire externe, cette sortie de données représentant le contenu de la mémoire principale, de la situation d'E/S et de la situation d'UC, la mémoire externe ayant une zone de stockage de capacité prédéterminée afin de mémoriser complètement le contenu de la mémoire principale, ladite capacité étant maintenue fixe séparément de la capacité de stockage destinée à sauvegarder les programmes et les données, et effectuer la lecture ultérieure, à partir de la mémoire externe, des données sauvegardées auparavant dans celle-ci, afin de restaurer le contenu de la mémoire principale, de la situation d'E/S et de la situation d'UC à un état antérieur.
